# EUROPÄISCHE PATENTANMELDUNG

(11) **EP 0 610 736 A1**
(43) Veröffentlichungstag der Anmeldung: **17.08.1994**
(21) Anmeldenummer: 94101229.6
(22) Anmeldetag: 28.01.1994
(51) Int. Cl.: F01N 3/02, F01N 3/00

(54) **Einrichtung zur Verringerung des Schadstoffausstosses bei Kraftfahrzeugen**

(30) Priorität: 06.02.1993 DE 4303514
(71) Anmelder: Vetter, Richard, D-31226 Peine (DE)
(72) Erfinder: Vetter, Richard, D-31226 Peine (DE)
(74) Vertreter: Depmeyer, Lothar

(57) **Zusammenfassung**

Die Erfindung geht aus von Einrichtungen der obigen Art und strebt eine Verbesserung des Wirkungsgrades bekannter Einrichtungen und ferner solche Einrichtungen an, deren Wirkunsgrad sich mit grösser werdender Geschwindigkeit des Fahrzeugs verbessert. Zur Lösung dieser Aufgabe ist erfindungsgemäss ein vom Fahrtwind und/oder der Ansaugluft der Verbrennungskraftmaschine (1) beaufschlagter Wärmetauscher (9) vorgesehen, in dem die Abgase auf den Taupunkt (Kondensationstemperatur) oder eine noch geringere Temperatur abgekühlt werden, wobei vorzugsweise das anfallende Kondensat in der Einrichtung neutralisiert werden soll.

## Beschreibung

Die Erfindung betrifft eine Einrichtung zur Verringerung des Schadstoffausstosses bei durch Verbrennungskraftmaschinen angetriebenen Kratfahrzeugen., und es liegt ihr die Aufgabe zugrunde, die vorgenannte Einrichtung so auszubilden, dass bei einer guten Betriebssicherheit der Einrichtung ein ausgezeichneter Wirkungsgrad der Einrichtung erreichbar ist. Zudem soll die Einrichtung so ausgeführt werden können, dass sich der Wirkunsggrad mit grösser werdender Geschwindigkeit der Fahrzeuge verbessert; also dann besonders günstig wird, wenn der Ausstoss an schädlichen Auspuffstoffen am grössten bzw. die Fahrgeschwindigkeit hoch ist.

Zur Lösung dieser Aufgabe ist aufgrund der Erfindung am Fahrzeug ein vom Fahrtwind und/oder der Ansaugluft der Verbrennungskraftmaschine beaufschlagter Wärmetauscher vorgesehen, in dem zumindest ein Teil der in den Abgasen enthaltenen kondensationsfähigen Stoffen auf den Taupunkt (Kondensationstemperatur) oder eine noch geringere Temperatur abgekühlt wird. Es versteht sich, dass die Wirkung eines solchen Wärmetauschers dann am grössten ist, wenn grössere Luftmengen angesaugt bzw. die Verbrennungskraftmaschine stärker belastet wird bzw. schneller läuft. Zudem bewirkt die Abkühlung der Abgase eine erwünschte Kondensation, um dann die flüssigen Rückstände neutralisieren zu können. Eine solche Kondensation tritt bei einer Temperatur von etwa 60°C ein.

Diesem Wärmetauscher kann ein weiterer Wärmetauscher vorgeschaltet werden, der vom Kühlwasser des Verbrennungsmotors beaufschlagt wird, damit die in den weiteren Wärmetauscher eingeleiteten Abgase etwa auf eine Temperatur gebracht werden, die der üblichen Kühlwassertemperatur, also etwa 8o - 90° C entspricht. Unter diesen Voraussetzungen besteht für den erstgenannten Wärmetauscher die Möglichkeit, die Abgase schneller auf den Taupunkt herunterzukühlen.

Das schadstoffbelastete Kondensat wird vorzugsweise durch einen granulatartigen Katalysator neutralisiert.

Weitere Einzelheiten der Erfindung werden anhand der Zeichnung erläutert, in der ein Ausführungsbeispiel der erfindungsgemässen Einrichtung dargestellt ist.

Es zeigen:

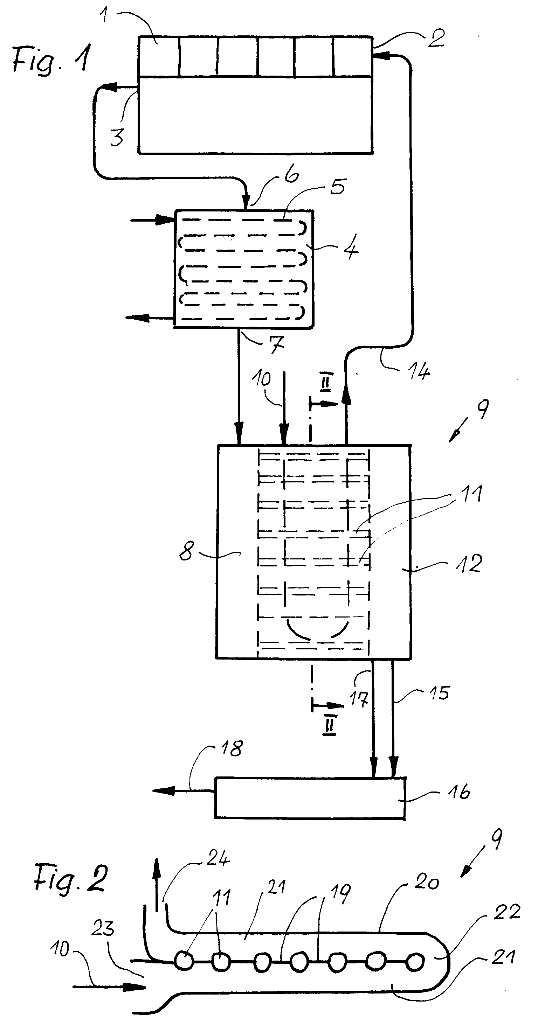

Fig. 1 eine schematisch dargestellte Einrichtung zur Verringerung des Schadstoffausstosses von Verbrennungskraftmaschinen bei Strassenfahrzeugen und
Fig. 2 einen Schnitt nach der Linie II - II von Fig. 1.
Fig. 3 einen abgewandelten Wärmetauscher zur Abkühlung der Abgase durch Zuluft im Teilquerschnitt,
Fig. 4 einen Schnitt nach der Linie IV - IV von Fig. 3 und
Fig. 5 einen Schnitt nach der Linie V - V von Fig. 3.

Der Motor des Fahrzeuges ist mit 1 bezeichnet. Er hat einen Ansaugstutzen 2 und einen Auspuff 3 Dem Motor 1 ist ein Wärmetauscher 4 zugeordnet, dessen kühluende Räume z.B. in Form von Rohrschlangen 5 in den Kühlwasserkreislauf des Motors einbezogen sind; das Kühlwasser des Motors 1 durchströmt also die Rohrschlangen 5. Zu kühlen sind in dem Wärmetauscher 4 die bei 6 in den Wärmetauscher 4 eingeleiteten Abgase, die den Wärmetauscher 4 bei 7 verlassen. In üblicher Weise erreicht die Kühlwassertemperatur Werte von etwa 8o - 90°C. Demgemäss können die Abgase den Wärmetauscher 4 mit einer Temperatur von etwa 85 - 95°C verlassen.

Vom Wärmetauscher 4 gelangen die bereits abgekühlten Abgase in die Sammelleitung 8 eines weiteren Wärmetauschers 9, der sich z.B. unterhalb des Fahrzeuges in der Weise befinden kann, dass der Fahrtwind in Richtung des Pfeiles 1o in den Wärmetauscher 9 gelangt. Um den Kühleffekt besonders gross werden zu lassen, zweigen von der Sammelleitung 8 mehrere quer zum Fahrzeug angeordnete Leitungen 11 geringeren Durchmessers ab, die in eine weitere, parallel zur Sammelleitung 8 angeordnete Sammelleitung 12 einmünden. Der Luftstrom innerhalb des Wärmetauschers 9 führt zu einer weiteren Abkühlung der Abgase, die den Wärmetauscher 9 am entgegengesetzten Ende der Sammelleitung 12 her verlassen.

Wichtig ist nun, dass die in den Wärmetauscher 9 eingeleitete Luft über die Leitung 14 dem Ansaugstutzen 2 zugeleitet wird. Es versteht sich, dass die Luft innerhalb des Wärmetauschers 9 eine entsprechende Vorwärmung erfährt.

Innerhalb des Wärmetauschers werden die Abgase so weit abgekühlt, dass eine Kondensation eintritt. Das Kondensat wird im Sinne des Pfeiles 15 einer Neutralisationsstufe 16 zugeleitet, wo es z.B. durch ein geeignetes Granulat neutralisiert wird. Etwa austretendes Wasser kann gefahrlos zersteuben, da es neutral und gefahrlos ist. Die aus dem Wärmetauscher 9 austretenden, abgekühlten Abgase verlassen den Wärmetauscher 9 bei 17. Sie können für sich ins Freie geleitet, aber auch über die Neutralisationsstufe 16 z.B. bei 18 abgeleitet werden.

Die Schnittdarstellung gemäss Fig. 2 lässt erkennen, dass die quer zum Fahrzeug angeordneten Leitungen 11 zusammen mit dazwischen angeordneten Blechen 19 eine Scheidewand bilden, um so durch eine äussere Verkleidung 2o einen unteren und einen oberen Luftkanal 21 zu bilden in der Weise, dass beide Luftkanäle 21 in Fahrtrichtung des Fahrzeuges gesehen hinten über einen Bogen 22 in Verbindung stehen. In Fahrtrichtung gesehen vorne sind die beiden offenen Enden der Luftkanäle 21. Der Fahrtwind gelangt dabei in den Eintrittsstutzen 23, wird durch die Luftkanäle 21 geleitet und dabei an den Leitungen 11 entlanggeführt, um die in den Leitungen 11 geführten Abgase auf oder unter den Taupunkt abzukühlen. Der Austrittsstutzen 24 ist mit dem Ansaugstutzen 2 verbunden, und zwar über die Verbindungsleitung 14

Der Wärmetauscher 9 kann abweichend ausgeführt sein, jedoch ist es stets von Vorteil, wenn die vom Fahrtwind beaufschlagten Leitungen 11 quer zum Fahrzeug verlaufen. Dies würde auch voraussetzen, dass sich die Speiseleitungen zum Zuführen der Abgase ( Sammelleitungen 8, 12) in Fahrzeuglängsrichtung erstrecken.

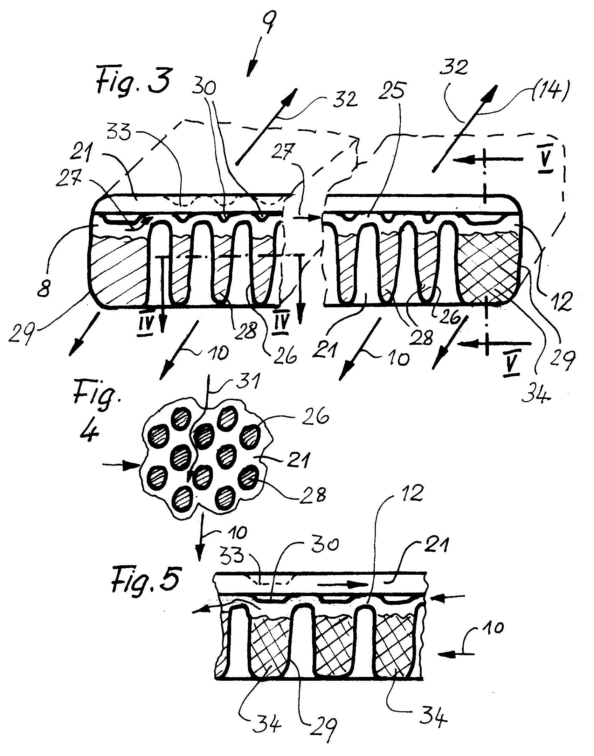

Bei dem Wärmetauscher gemäss Fig. 3 sind zwar auch zu beiden Seiten angeordnete Sammelleitungen 8 und 12 vorgesehen, jedoch sind die sie verbindenden Kanäle 25 - im Gegensatz zu den Leitungen 11 - nicht gestreckt ausgebildet und von ebenen Wandungen begrenzt, sondern mit nach unten gerichteten, langgestreckten Vertiefungen 26 versehen, über die die abzukühlenden und in Richtung der Pfeile 27 sich bewegenden Abgase hinwegstreichen Diese von aussen etwa fingerartigen Gebilde mit den Vertiefungen 26 dienen zur Aufnahme des Kondensats, das mit 28 bezeichnet ist.. Die senkrecht verlaufenden Vertiefungen 26 sollen das Kondensat 28 gewissermassen speichern und vor allen Dingen auch gegen ungewolltes Abfliessen bei der Fahrzeugbewegung sichern. Der Kühleffekt für die Abgase wird auch dadurch gesteigert, dass die Abgase über die Oberfläche des Kondensats 28 geführt und so besser abgekühlt werden können. Zugleich bildet das Kondensat 28 ein Reservoir an Kühlmasse, wenn nämlich das Fahrzeug gestartet werden soll und der Luftstrom in Richtung des Pfeiles 1o noch nicht vorhanden oder ungenügend sein sollte. Nach unten gerichtete Vertiefungen 29 weisen auch die beiden Sammelleitungen 8, 12 auf., jedoch befinden sich hier breitere Durchgangsquerschnitte, uni die Gesamtheit der Abgase abführen zu können. Um ausserdem die Abgase besonders intensiv mit der Kondensatoberfläche in Verbindung zu bringen, kann die untere Wandung des oberen Kanals 21 oberhalb der Vertiefungen 26, 29 in Richtung auf diese Vertiefungen mit Vorwölbungen versehen sein, die bei 3o angedeutet sind. Darüber hinaus sind die Vertiefungen 26 gemäss Fig. 4 auch gegeneinander versetzt, um einen geradlinigen Durchtritt der einströmenden Luft auszuschliessen bzw. eine Luftströmung im Sinne des Pfeiles 31, also eine Strömung in Schlangenlinienform zu erreichen. Darüber hinaus können auch die oberen Wandungen des Kanals im Sinne der Vorwölbungen 3o vorgewölbt sein ( Eindrückungen 33 ). Dadurch wird auch im oben gelegenen Kanal 21 die Kühlwirkung der den Wärmetauscher 9. verlassenden Luft (Pfeile 32) verbessert.

Es sei erwähnt, dass für die Querströmung der Abgase im Sinne der Pfeile 27 einzelne Querkanäle - vergleichbar mit den Leitungen 11 - benutzt werden können -- allerdings mit den vorerwähnten Vertiefungen 26 --, jedoch ist es auch möglich , wesentliche breitere Querkanäle, ggfs. nur einen oder zwei oder drei Querkanäle anzuordnen.

Die Vertiefungen 29 in der Sammelleitung 12 eröffnen auch die Möglichkeit, zumindest diejenigen Vertiefungen29, die dem Ausgang des Wärmetauschers 9 zugekehrt sind, mit einem Granulat zur Neutralisation des Kondensats gefüllt werden, das mit 34 bezeichnet ist. Es versteht sich, dass dieses Granulat auch durch andere Entsorgungsmittel für das Kondensat ersetzt werden kann. Damit wird erreicht, dass mit Sicherheit schädliches Kondensat hinten aus der Anlage bzw. dem Wärmetauscher 9 austreten kann. Schliesslich würde sich in diesem Falle auch die Neutralisationsstufe 16 erübrigen. Darüber hinaus wird durch die erwähnte Führung der Abgase innerhalb des Wärmetauschers 9 im Regelfalle ein Schalldämpfer in der Abgasanlage erübrigt.

## Patentansprüche

1. Einrichtung zur Verringerung des Schadstoffausstosses bei durch Verbrennungskraftmaschinen angetriebenen Fahrzeugen, dadurch gekennzeichnet, dass ein vom Fahrtwind und/oder der Ansaugluft der Verbrennungskraftmaschine beaufschlagter Wärmetauscher (9) vorgesehen ist, in dem die Abgase auf den Taupunkt (Kondensationstemperatur) oder eine noch geringere Temperatur abgekühlt werden.

2. Einrichtung nach Anspruch 1, dadurch gekennzeichnet, dass dem Wärmetauscher (9) ein weiterer, zweiter Wärmetauscher (4) vorgeschaltet ist, der vom Kühlwasserkreislauf der Verbrennungskraftmaschine beaufschlagt ist und der Abkühlung der von dieser Maschine abgeleiteten Abgase dient.

3. Einrichtung nach Anspruch 1, dadurch gekennzeichnet, dass der Wärmetauscher (4) eine sich in Fahrzeuglängsrichtung erstreckende Sammelleitung (8) für die Abgase und im Abstand davon eine zweite, parallel dazu verlaufende Sammelleitung (12) aufweist, wobei die beiden Sammelleitungen (8,12) durch mehrere, quer zum Fahrzeug verlaufende Leitungen (11) verbunden sind, die dem Fahrtwind des Fahrzeuges bzw. der Ansaugluft der Verbrennungskraftmaschine (1) ausgesetzt sind.

4. Einrichtung nach Anspruch 3, dadurh gekennzeichnet, dass die Leitungen (11) derart zusammengefügt bzw. durch Bleche (19) verbunden sind, dass für den Fahrtwind bzw. die Ansaugluft eine Scheidewand gebildet ist, und dass der Fahrtwind bzw. die Ansaugluft in Richtung dieser Scheidewand bzw. parallel dazu geleitet ist.

5. Einrichtung nach Anspruch 4, dadurch gekennzeichnet, dass die Leitungen (11) von einer im wesentlichen u-förmigen Umkleidung (2o) umschlossen sind in der Weise, dass sich oberhalb und unterhalb der Scheidewand ein Luftkanal (21) bildet und dass beide Luftkanäle an dem in Fahrtrichtung des Fahrzeuges hinteren Ende verbunden sind und am vorderen Ende einen Lufteintritt (Fahrtwind , 23) und einen Luftaustritt ( Stutzen 24 ) bilden, der mit dem Ansaugstutzen (2) der Verbrennungskraftmaschine (1) in Wirkverbindung steht.

6. Einrichtung nach Anspruch 5, dadurch gekennzeichnet, dass dem Wärmetauscher (9) eine Neutralisationsstufe (16) für das in dem Wärmetauscher (9) anfallende Kondensat nachgeschaltet ist.

7. Einrichtung nach Anspruch 1, dadurch gekennzeichnet, dass der Wärmetauscher (9) so ausgebildet ist, dass die Abgase mindestens auf etwa 4o - 6o°C abkühlbar sind.

8. Einrichtung nach Anspruch 1 und 2, dadurch gekennzeichnet, dass die beiden Wärmetauscher (4,9) so ausgebildet sind, dass die Abgase mindestens auf etwa 4o - 6o°C abkühlbar sind.

9. Einrichtung nach Anspruch 1, dadurch gekennzeichnet, dass die die Abgase führenden Leitungen des Wärmetauschers (9) (Kanäle 25, Sammelleitungen 8,12) mit nach unten gerichteten Vertiefungen (26,29) zur Kondensataufnahme versehen sind.

10. Einrichtung nach Anspruch 9, dadurch gekennzeichnet, dass die Vertiefungen (26) eine langgestreckte Gestalt aufweisen.

11. Einrichtung nach Anspruch 1o, dadurch gekennzeichnet, dass benachbarte Vertiefungen (26) in Strömungsrichtung der Luft gegeneinander versetzt sind (Pfeil 31).

12. Einrichtung nach Anspruch 1 und 9, dadurch gekennzeichnet, dass die zu beiden Seiten des Wärmetauschers (9) befindlichen Sammelleitungen (12) des Wärmetauschers (9) mit in Längsrichtung der Sammelleitungen (12) hintereinander angeordneten Vertiefungen (29) versehen sind.

13. Einrichtung nach Anspruch 9, dadurch gekennzeichnet, dass die oberhalb der Vertiefungen (26,29) befindlichen Wandungen des Wärmetauschers (9) mit in Richtung auf die Vertiefungen vorspringenden Vorwölbungen (3o) versehen sind.

14. Einrichtung nach Anspruch 13, dadurch gekennzeichnet, dass die den Vorwölbungen (3o) gegenüberliegenden Wandungen des Luftkanals (21) den Vorwölbungen entsprechend gestaltet sind (Eindrückungen 33).

15. Einrichtung nach Anspruch 9, dadurch gekennzeichnet, dass zumindest die dem Abgasausgang des Wärmetauschers (9) zugekehrten Vertiefungen (29) der den Abgasausgang des Wärmetauschers (9) bildenden Sammelleitung (12) mit zur Neutralisation des Kondensats dienenden Mitteln (34, Granulat ) versehen sind.

16. Einrichtung nach Anspruch 9, dadurch gekennzeichnet, dass die Tiefe der Vertiefungen (26) wesentlich grösser ist als deren lichte Eintrittsbreite.

17. Einrichtung nach Anspruch 1 und 9, dadurch gekennzeichnet, dass die Frischluft (Frischlufteintritt 23 ) dem Querschnittsteil des Wärmetauschers (9) zuführbar ist, in den die Vertiefungen (26) hineinragen bzw. der von den Vertiefungen (26) durchsetzt ist.

18. Einrichtung nach Anspruch 16, dadurch gekennzeichnet, dass die Vertiefungen (26) bzw. die sie umschliessenden Wandungen aussen fingerartig gestaltet sind.
